# EUROPEAN PATENT SPECIFICATION

(11) **EP 2 773 488 B1**
(45) Date of publication and mention of the grant of the patent: **20.01.2016**
(21) Application number: 12784433.0
(22) Date of filing: 02.11.2012
(51) Int. Cl.: B23Q 41/02, B29C 45/42, B29C 33/44, B23Q 3/06, B23Q 3/18

(54) **DATUM TRANSFER**
ÜBERTRAGUNG DER BEARBEITUNGKOORDINATEN EINES TEILS
TRANSFERT DES COORDONNÉE D'USINAGE D'UN PIECE

(30) Priority: 03.11.2011 GB 201118981; 03.11.2011 US 201161555004 P
(43) Date of publication of application: 10.09.2014
(73) Proprietor: Vestas Wind Systems A/S, 8200 Aarhus N (DK)
(72) Inventor: SANDERCOCK, Stephen, Ryde PO33 1LG (GB); SMITH, Jonathan, Southampton Hampshire SO19 9BS (GB)
(74) Representative: Vestas Patents Department
(86) International application number: PCT/DK2012/050404
(87) International publication number: WO 2013/064156

(56) References cited:
- WO-A1-98/50180
- US-A1- 2007 107 181
- US-B1- 6 217 013

## Description

### Technical field

The present invention relates generally to techniques used in the manufacture of large parts, such as component parts of modern utility-scale wind turbines. More specifically, the present invention relates to a method and apparatus for transferring a workpiece such as a large wind turbine component in datum alignment between tools in a manufacturing process.

### Background

Many modern wind turbine components such as rotor blades and component parts thereof are created in large moulds. Once formed, the moulded parts are released from the moulds and transferred to another tool where subsequent manufacturing steps take place. For example, the moulded parts may be transferred to an assembly jig for assembly with other parts to form the finished component. The moulded part or finished component may also be transferred to tools for machining or finishing operations.

It is generally important to ensure precise alignment between a workpiece, for example the moulded part referred to above, and the tool to which it is transferred. This ensures that assembly operations or subsequent machining or finishing steps are performed correctly, and within predefined acceptable tolerances. To facilitate this alignment, the workpiece is typically provided with a sacrificial portion at its periphery upon which a datum feature or equivalent reference point is provided. The datum feature on the workpiece engages with, or otherwise aligns with, a corresponding datum feature on the tool to which the workpiece is transferred to ensure correct alignment of the workpiece with the tool. The sacrificial portion of the workpiece is ultimately removed to form the finished component.

An example of the above process is the production of a spar for a wind turbine blade. A spar is an elongate reinforcing member that extends inside the blade from root to tip to provide structural rigidity to the blade. Applicant's PCT patent application WO2009/153341A2 describes a spar formed from four parts: two spar caps and two shear webs. The spar caps each form part of a respective upper and lower aerodynamic shell of the wind turbine blade, whilst the shear webs comprise longitudinal beams that extend between the spar caps. The two spar caps and two shear webs are assembled to form a spar structure having a box-shaped cross section.

The spar caps are made from carbon-fibre reinforced composite materials and are formed in female moulds. Once formed, the moulded spar caps are lifted from the moulds using a crane or other lifting equipment and transferred to an assembly jig for assembly with the two shear webs to form the spar box structure.

During the initial moulding process, a sacrificial portion is created at an end of each spar cap. The sacrificial portion generally comprises a flange. A female datum feature is provided on the sacrificial portion. To ensure correct alignment of the spar cap on the assembly jig, the spar cap is arranged on the assembly jig such that the female datum feature mates with a corresponding male datum feature associated with the assembly jig. Once the spar structure has been assembled, the sacrificial portions of the spar caps are removed and discarded.

Creating sacrificial portions on a workpiece ultimately leads to material wastage. The present invention aims to provide a more efficient and more cost-effective method and apparatus for ensuring the correct alignment of a workpiece with tools, which avoids the requirement for sacrificial portions to be provided on the workpiece.

When lifting and transferring very large components such as part of a wind turbine rotor blade between tools, it is important to preserve the precise geometry of the component and prevent it from twisting or buckling. Many modern rotor blades are in fact designed to have a certain twist, and it is important to be able to support twisted components without altering this twist. At present, a substantial truss frame is attached to these components so that the components remain fully supported during transfer. The truss frame is very heavy, and positioning it relative to the component requires great care and the use of heavy-duty lifting equipment.

WO98/50180 describes a lay-up tool on which composite parts are made. The tool, along with the composite part can be transported to a machine tool such as a five-axis gantry machine tool.

The present invention also aims to provide an improved method and apparatus suitable for transferring large parts between tools, which may facilitate the manufacture of wind turbines and component parts thereof.

### Summary of the invention

According to a first aspect of the present invention there is provided a method for transferring a workpiece such as a large wind turbine component in datum alignment between tools during a manufacturing process, the method comprising: arranging a support structure in datum registration with a first tool, the first tool supporting a workpiece; attaching the workpiece to the support structure; releasing the workpiece from the first tool; arranging the support structure in datum registration with the second tool and such that the workpiece is supported by the second tool; and releasing the workpiece from the support structure, wherein arranging the support structure in datum registration with the first and second tools ensures correct alignment of the workpiece with respect to the second tool.

The method according to the present invention eliminates the need to provide datum features on the workpiece itself. This is because the support structure can be precisely aligned with the tools, i.e. arranged in datum registration with the tools, and the workpiece remains attached to the support structure during transfer between the tools. The present invention therefore eliminates the need for datum-carrying sacrificial portions on the workpiece, thereby reducing material wastage and cost, both in terms of material costs, and process costs because removal of sacrificial portions requires additional process steps.

Arranging the support structure in datum registration with the or each tool preferably involves forming an interlock between the support structure and the respective tool. The interlock may serve to restrict or substantially prevent relative lateral movement between the support structure and the tool, thereby maintaining precise alignment of the support structure relative to the tool. In preferred embodiments of the invention, the support structure and the tool are arranged in mating engagement by means of male and female datum formations provided on the support structure and the respective tools.

The support structure may attach to the workpiece via any suitable attachment means, for example by mechanical engagement or by adhesion. However, the method preferably involves attaching the workpiece to the support structure by means of vacuum. For example the method may include attaching one or more vacuum pads or cups associated with the support structure to a surface of the part. Vacuum attachment is particular advantageous because it allows the part to be attached and released from the support structure quickly and does not damage the surface of the part.

Releasing the workpiece from the first tool may comprise decoupling the workpiece from the first tool. If the workpiece is not coupled to the first tool, releasing the workpiece may simply involve lifting the workpiece off the first tool, or otherwise separating the workpiece and the first tool.

If the first tool is a mould, releasing the workpiece from the first tool may involve demoulding the workpiece from a mould surface of the first tool. The method may comprise peeling the workpiece away from the mould surface. Peeling the workpiece from the mould surface generally involves first releasing an edge-part or end-part of the workpiece from the mould surface before sequentially releasing successively-adjacent parts of the workpiece, working towards an opposite edge or end of the workpiece.

Peeling the workpiece from a mould surface is advantageous because it requires significantly less force than would otherwise be required to release the entire workpiece from the mould surface simultaneously. Peeling is therefore particularly beneficial for large workpieces such as modern wind turbine blades or component parts thereof.

Releasing the workpiece from the first tool may involve applying a release force to the workpiece. The release force is preferably applied in a direction substantially perpendicular to a surface of the first tool on which the workpiece is supported. This ensures that the workpiece is released cleanly from the surface of the tool and is not dragged along the surface.

Preferably the method involves exerting the release force on the workpiece with the support structure in abutment with the first tool such that the release force is reacted through the first tool via the support structure. An alternative would be to use external lifting equipment such as a crane, in which case the force would be reacted against the factory floor for example. However, if the coupling between the workpiece and tool is strong, which may be the case when the tool is a mould, using external lifting equipment could inadvertently result in the tool being lifted together with the workpiece, or more likely it could result in an uncontrolled detachment of the workpiece from the tool, which is dangerous and may result in damage to the component. Reacting the release force through the tool provides greater control of the release process. It also enables the release process to be performed independently from a subsequent lifting step.

The method may involve applying the release force to the workpiece via the attachment means. For example the attachment means are preferably associated with actuators capable of moving the attachment means with respect to the support structure. Preferably the workpiece is attached to the support structure at a plurality of locations, for example at a series of locations along the length of the workpiece. The method may involve applying the release force sequentially at the series of locations to peel the workpiece from a mould surface of the tool.

The method may involve arranging a series of support structures across the first tool for example at intervals along the length of the first tool in the case of an elongate workpiece such as a component of a rotor blade. The method may include attaching each support structure to a respective part of the workpiece via attachment means associated with the respective support structure. This arrangement is convenient because it avoids having to use very large support structures to cater for very large components. Scaling may be achieved by varying the quantity of support structures rather than the size of the support structure, which lends itself to the design of a modular system comprising a universal support structure. In a modular system, the attachment means of the respective modules may be operated independently, and sequentially to peel the workpiece from a mould surface of the tool.

The method may involve applying the release force in a first direction to a first part of the workpiece and in a second direction to a second part of the workpiece, wherein the first and second directions are different. The first and second parts of the workpiece may be spaced apart relative to each other along the length of the workpiece. The first direction may be substantially perpendicular to a local surface of the first part of the workpiece and the second direction may be substantially perpendicular to a local surface of the second part of the workpiece. This scheme may be used when the workpiece exhibits a twist along its length, which is typical for parts of modern wind turbine blades such as the blade shells or spars. By applying the release force perpendicular to the local surface of a twisted workpiece, the workpiece can be released cleanly from the tool, and twisted parts can be peeled from a mould surface.

The method preferably involves lifting or otherwise moving the support structure and attached workpiece away from the first tool. A crane or other lifting equipment may be attached to the support structure and used to lift the support structure and attached workpiece away from the first tool. Alternatively, it will be appreciated that the first tool could be moved relative to the support structure and attached workpiece.

The method may involve transporting the workpiece to the second tool. The second tool may be an assembly jig for example, where the workpiece is assembled with other parts to form a finished component. The second tool may be located remotely from the first tool, for example at another station in the factory. The crane or other lifting equipment referred to above may be used to transport the support structure and attached workpiece from the first tool to the second tool. Alternatively, the workpiece may be supported in a single location and the tools moved relative to the workpiece.

The workpiece preferably remains rigidly attached to the or each support structure during lifting and transporting of the workpiece such that relative movement between the workpiece and the or each support structure is substantially prevented. This ensures that the workpiece will be precisely aligned with the second tool when the support structure is arranged in datum registration with the second tool.

Within the same inventive concept, there is provided a method of manufacturing a component comprising transferring a workpiece in datum alignment between tools in accordance with the method described above. The method is particularly suitable for manufacturing large parts, such as component parts of a wind turbine. For example, the method may be used to manufacture a rotor blade or a component part thereof such as a spar or a spar cap. Hence, within the present inventive concept there is also provided a wind turbine component manufactured in accordance with the method described above, and a wind turbine having a component manufactured in accordance with the method described above.

According to a second aspect of the present invention there is provided an apparatus for transferring a workpiece such as a large wind turbine component in datum alignment between tools, the apparatus comprising: a support structure for carrying the workpiece between the tools; and an attachment device for attaching the workpiece to the support structure, wherein the support structure comprises datum features for aligning with corresponding datum features of the first and second tools.

Within the same inventive concept, the present invention also provides a tool for supporting a workpiece such as a large wind turbine component, the tool comprising datum features for aligning with datum features of an apparatus as defined above. The first and second tools referred to above may be any tool in which alignment of the workpiece on the tool is important. For example, one or both tools may be a mould tool, an assembly jig, or part of a machining or finishing station. In preferred embodiments of the invention, the first tool is a mould tool. In the detailed examples described later, the first tool is a mould tool and the second tool is an assembly jig.

In preferred embodiments of the invention, the support structure includes datum features that mate with complementary datum features of the tools. It will be appreciated that other non-mating datum features could be used for aligning the support structure with the tools. Mating datum features are preferred because these may form an interlock between the support structure and the tool, which may restrict or substantially prevent relative movement between the tool and the support structure and hence preserve the datum alignment.

The datum features are preferably configured substantially to prevent relative lateral movement between the support structure and the tool. Relative vertical movement between the support structure and the tool may be restricted by the weight of the support structure bearing against the tool. If required, latches or other clamping means may be provided between the support structure and the tool to restrict relative vertical movement.

The datum features may include projecting formations associated with one of the support structure and the tool, which are received in corresponding recesses provided in the other of the support structure and the tool. Alternatively, the support structure may have both projections and recesses for engaging with corresponding recesses and projections of the tool.

The support structure may have a first set of datum features for aligning with datum features of the first tool and a second set of datum features for aligning with a second set of datum features of the second tool. Preferably, however, the support structure has a single set of datum features that align with corresponding datum features of both the first and second tools; in this regard the datum features of the first tool may match the datum features of the second tool.

The support structure may include an abutment surface that abuts an abutment surface of the tool when the support structure is positioned in datum registration with the tool. The datum features of the support structure may be provided on or otherwise mounted to the abutment surface of the support structure, whilst the datum features of the tool may be provided on the abutment surface of the tool. In the case of a mould tool, the abutment surface of the tool may be a flange surrounding a mould surface of the tool. A female mould generally has a substantially concave mould surface with a flange around an upper periphery of the mould surface. A male mould generally has a substantially concave mould surface, and may have a flange surrounding a lower periphery of the mould surface.

The datum features are preferably provided on the abutment surface of the support structure. To accommodate male mould tools and twisted mould tools for example, one or more datum features may be located on a spacer provided between the support structure and the tool. For example, a datum feature may be provided on the end of a spacer mounted to the support structure. In the detailed examples described later, a datum feature is provided on the end of a spacer in the form of a column, which is mounted to the abutment surface of the support structure. The spacer may alternatively be associated with the tool. In the case of a male mould tool, the spacers are suitably sized to accommodate the convex mould surface. In the case of a twisted workpiece, the spacers may be suitably sized to ensure that the support structure is substantially horizontal when it is placed against the tool.

The apparatus is preferably configured such that relative movement between the workpiece and the support structure is prevented when the workpiece is attached to the support structure. This ensures that the workpiece will be precisely aligned with the second tool when the support structure is positioned in datum registration with the second tool. It is conceivable that the apparatus could be configured to allow some relative movement between the support structure and the workpiece, however additional means of referencing the position of the workpiece with respect to the support structure would then be required, making this option less preferable.

The attachment device may comprise any suitable means for coupling the workpiece to the support structure. However, in preferred embodiments of the invention, the attachment device is part of a vacuum assembly which includes a vacuum generator and a vacuum attachment such as a vacuum pad, vacuum cup or equivalent, which is arranged to seal against a surface of the workpiece. A vacuum coupling is preferred because it allows the workpiece to be attached and released from the support structure quickly and without damaging the surface of the workpiece.

The attachment device may include one or more actuators provided between the vacuum attachment and the support structure. Suitable actuators include hydraulic or pneumatic rams or equivalent. The actuators may be configured to move the vacuum attachment towards or away from the support structure. For example, once the support structure has been placed against the tool, the actuators may be extended to press the vacuum attachment against the workpiece.

The apparatus is preferably configured to exert a release force upon the workpiece, causing the workpiece to release from the first tool. For example, once the vacuum attachment has been attached to the workpiece, the release force may be exerted on the workpiece by contracting the actuators such that the vacuum pad is moved towards the support structure. The apparatus is preferably configured such that the release force is reacted by the tool. This may be achieved by exerting the release force with the support structure remaining in contact with the tool. The benefits of reacting the release force through the tool have already been outlined above.

The apparatus may include a plurality of attachment devices. For example a plurality of vacuum pads may be mounted on the support structure. Each attachment device may be arranged to attach to a local surface portion of the workpiece. The apparatus may be computer controlled. The apparatus is preferably configured such that the plurality of attachment devices are operable independently of one another. In certain embodiments, the apparatus may be configured such that the plurality of attachment devices are operated sequentially. This allows the workpiece to be peeled away from a mould surface of the tool.

Modular embodiments of the apparatus are envisaged. For example, the apparatus may include a plurality of modules each comprising a support structures and an attachment device. This arrangement is particularly suitable for very large components, such as wind turbine blades and component parts thereof, which are formed in correspondingly-large moulds. The plurality of modules may be arranged at intervals along the length of the tool, with the supporting structures of the respective modules each attaching to a local surface of the workpiece. As mentioned above, the attachment devices of the respective modules may be activated sequentially to peel the workpiece from a surface of the tool. In this regard, and as mentioned above, the apparatus may be automated under computer control.

The or each support structure preferably includes a mounting point for attaching to a crane or other lifting equipment. Once the workpiece has been released from the first tool, the lifting equipment may be operated to lift the or each support structure and attached workpiece away from the first tool and transfer the support structure and attached workpiece to the second tool. As already described above in relation to the first aspect of the invention, the or each support structure is positioned against the second tool such that the workpiece is supported by the second tool, and the workpiece is released from the or each support structure onto the second tool. By positioning the support structure in datum registration with the second tool, precise alignment of the workpiece with the second tool is ensured.

The or each support structure is preferably sufficiently rigid to avoid buckling or twisting when supporting the weight of the workpiece. This ensures that the workpiece is fully supported and its geometry is preserved during transfer between tools. The rigid support structures facilitate transporting the workpiece between tools. This is particularly beneficial when working with very large workpieces such as wind turbine blades and component parts thereof because it eliminates the need to mount the workpiece to a substantial truss frame structure during transport. Instead, the crane or other lifting equipment may attach to a single mounting point of the support structure. Consequently, the speed and ease of the manufacturing process is increased.

The present invention is particularly suitable for transferring very large parts between tools, for example parts of a wind turbine. Accordingly, the workpiece referred to above is preferably a wind turbine component such as a rotor blade or a component part thereof, for example a spar or part of a spar assembly such as a spar cap. Within the inventive concept the present invention provides a wind turbine component manufactured using the method or apparatus described above, and a wind turbine comprising said component.

It will be appreciated that preferred or optional features described in relation to one aspect of the invention are equally applicable to other aspects of the invention and repetition has been avoided purely for reasons of conciseness.

### Brief description of the drawings

In order that the present invention may be more readily understood, embodiments of the invention will now be described in detail, by way of example only, with reference to the following figures, in which:
Figures 1 to 5 relate to a first embodiment of the present invention and show a sequence of steps in which a transfer assembly is used to transfer a workpiece from a female mould tool to an assembly jig, wherein
   Figure 1 shows the transfer assembly positioned above the female mould tool;
   Figure 2 shows the transfer assembly positioned in datum registration with the female mould tool and attached to the workpiece;
   Figure 3 shows the transfer assembly releasing the workpiece from the female mould tool;
   Figure 4 shows the transfer assembly and attached workpiece lifted from the female mould tool; and
   Figure 5 shows the transfer assembly and attached workpiece arranged above an assembly jig to which the workpiece is to be transferred;
Figure 6 illustrates a second embodiment of the present invention in which the transfer assembly is adapted for use with a male mould tool; and
Figure 7 illustrates how the transfer assembly may be used in connection with a workpiece exhibiting a twist along its length.

### Detailed description

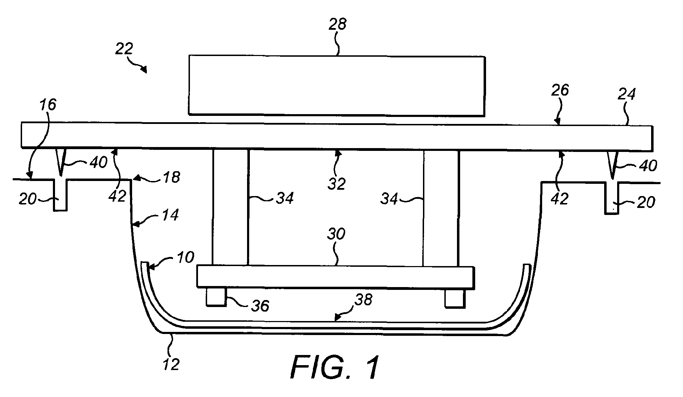

Figure 1 shows a workpiece 10 supported in a female mould tool 12. In this example, the workpiece 10 is a spar cap for a spar structure of a wind turbine blade as described in applicant's PCT patent application WO2009/153341A2. The spar cap 10 is moulded from carbon-fibre reinforced composite material.

The female mould tool 12, which is shown in cross-section in Figure 1, comprises a generally concave mould surface 14 and an upper shoulder portion or flange 16. The flange 16 is essentially a flat surface that surrounds and extends outwards from a periphery 18 of the concave mould surface 14.

A plurality of female datum features 20 are provided in the flange. A pair of female datum features 20 is shown in Figure 1. The female datum features 20 are located opposite one another on respective sides of the mould surface 14. In this example, the female datum features 20 each comprise a substantially cylindrical recess.

A transfer assembly 22 is shown in Figure 1. The transfer assembly 22 comprises a support structure in the form of a frame 24 and a vacuum assembly. The vacuum assembly comprises a vacuum generator and a battery for powering the vacuum generator, which are carried on an upper surface 26 of the frame 24, as represented by box 28 in Figure 1. The vacuum assembly also includes an attachment device 30 in the form of a vacuum pad, which is mounted to an underside 32 of the frame 24 via a pair of actuators 34. The vacuum pad 30 includes a high lift seal 36 for sealing against an inner surface 38 of the spar cap 10. Whilst only a single vacuum pad 30 is shown in Figure 1, in practice the vacuum assembly may include a plurality of vacuum pads 30 and associated actuators 34.

The transfer assembly 22 also includes a plurality of male datum features 40, which are provided on an abutment surface 42 of the frame 24. The abutment surface 42 is located in a peripheral region of the underside 32 of the frame 24, and abuts the flange 16 of the mould tool 12 when the transfer assembly 22 is placed upon the tool 12. A pair of male datum features 40 is shown in Figure 1. The male datum features 40 are located opposite one another on respective sides of the vacuum assembly. In this example, the male datum features 40 each comprise a conical pin.

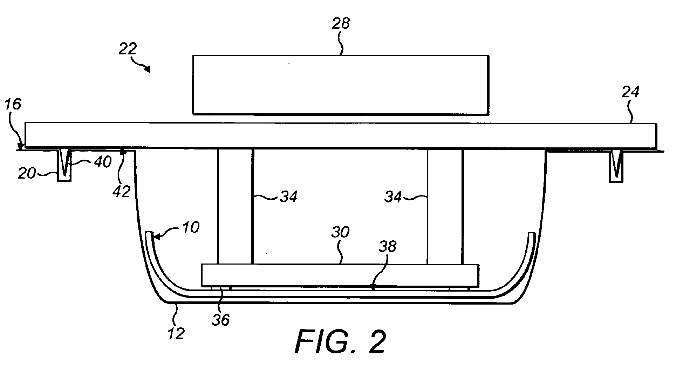

The transfer assembly 22 is used to de-mould the spar cap 10 from the female mould 12 and transfer the spar cap 10 together with the datum from the female mould 12 to an assembly jig as will now be described below with reference to Figures 2 to 5.

Referring to Figure 2, in use the transfer assembly 22 is placed against the female mould 12 such that the abutment surface 42 of the frame 24 abuts the flange 16 of the mould 12 with the male datum pins 40 of the frame 24 being received inside the female recesses 20 of the mould flange 16. In this configuration the frame 24 and mould 12 are effectively locked together in datum registration, such that relative lateral movement between the mould 12 and the frame 24 is substantially prevented.

The actuators 34 are operated to lower the vacuum pad 30 towards the inner surface 38 of the spar cap 10 until the high-lift seal 36 is pressed firmly against said surface 38. The vacuum generator 28 is then activated to withdraw air from the region within the seal 36, between the vacuum pad 30 and the inner surface 38 of the spar cap 10. This creates an effective vacuum between the vacuum pad 30 and the spar cap 10, which serves to attach the spar cap 10 to the vacuum pad 30, and hence to the frame 24 of the transfer assembly 22.

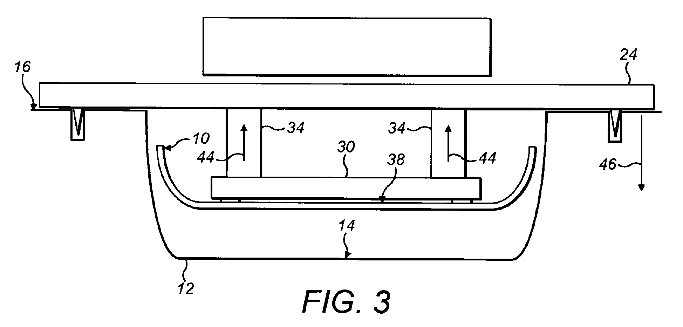

Referring to Figure 3, once the vacuum pad 30 has been attached to the spar cap 10, the actuators 34 are operated to lift the vacuum pad 30 towards the frame 24. The upward force provided by the actuators 34, which is represented by the arrows 44 in Figure 3, releases or 'demoulds' the spar cap 10 from the female mould 12. The demoulding load 44 is applied in a direction substantially perpendicular to the part of the mould surface 14 opposite the actuators 34. The demoulding load 44 applied by the actuators 34 is reacted downwards through the flange 16 of the mould 12 via the frame 24, as represented by the arrow 46 in Figure 3.

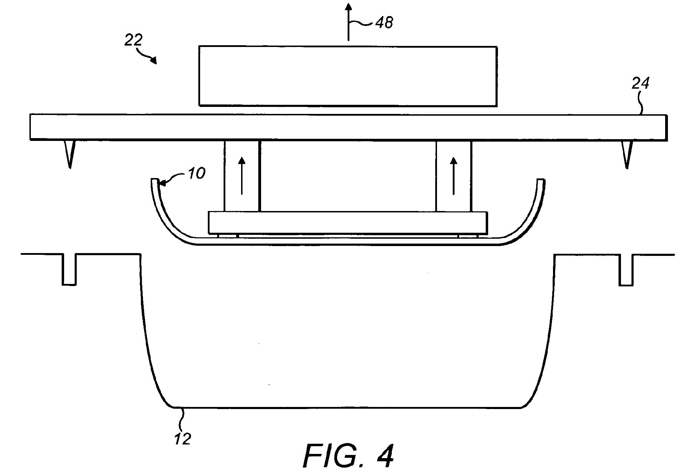

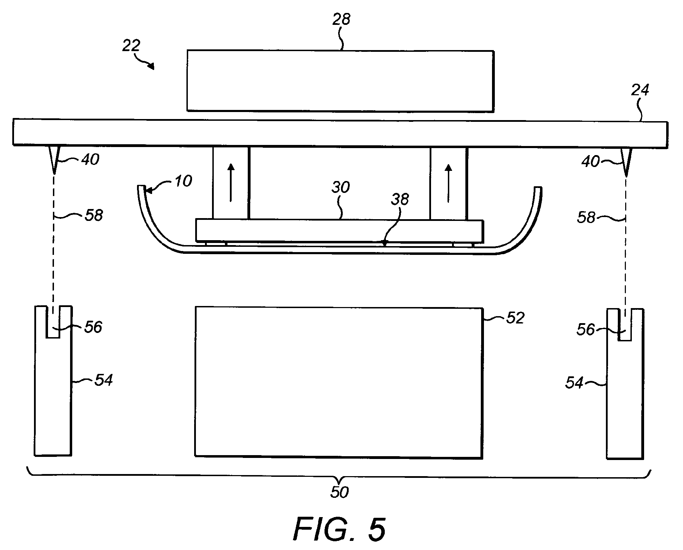

Referring to Figure 4, with the spar cap 10 attached to the frame 24 of the transfer assembly 22 and demoulded from the mould tool 12, the frame 24 is attached to a crane (not shown). The crane lifts the transfer assembly 22 and attached spar cap 10 away from the mould 12 in the direction of arrow 48 in Figure 4. The crane carriers the transfer assembly 22 and attached spar cap 10 to an assembly jig 50 (Figure 5), where the spar cap 10 is assembled with a corresponding spar cap and shear webs to form the spar structure.

Referring to Figure 5, the assembly jig 50 comprises an assembly fixture 52 for supporting the spar cap 10, which is located between a pair of sidewalls 54. The sidewalls 54 each include respective female datum features 56. A pair of female datum features 56 in the form of cylindrical recesses is shown in Figure 5. The crane positions the transfer assembly 22 above the assembly jig 50 such that the male datum pins 40 are substantially aligned above the female datum features 56 of the jig 50, as represented by the dashed lines 58 in Figure 5.

The transfer assembly 22 is then lowered towards the jig 50 until the male datum pins 40 are received within the female recesses 56 of the jig 50, and the frame 24 abuts the sidewalls 54 of the jig 50. A human operator may guide the transfer assembly 22 as it is lowered towards the jig 50. Once the spar cap 10 has been positioned on the assembly fixture 52, the vacuum generator 28 is deactivated and the vacuum pad 30 is decoupled from the inner surface 38 of the spar cap 10. The transfer assembly 22 is then lifted away from the assembly jig 50.

By way of the above techniques, the requirement for providing datum features on the spar cap 10 itself is eliminated. This is because the datum features 40 are provided on the frame 24 of the transfer assembly 22 and the spar cap 10 remains rigidly coupled to the frame 24 throughout the demoulding, lifting and transfer operations. Precise alignment of the spar cap 10 with the assembly fixture 52 is ensured by the provision of corresponding datum features 56 on the assembly jig 50.

Whilst the cross-sectional views of Figures 1 to 5 necessarily show only a single transfer assembly 22, a plurality of transfer assemblies 22 or 'modules' are used in practice because a spar cap is very long - typically 50 to 80 metres in length. The modules are arranged at intervals along the length of the mould tool 12. Once the or each vacuum pad 30 of the respective modules has been attached to the spar cap 10, the actuators 34 of the respective modules are operated sequentially to demould the spar cap 10, starting with the actuators 34 of the module located closest to one end of the spar cap 10. This action effectively peels the spar cap 10 away from the mould surface 14, which requires considerably less force than would be required if the actuators 34 were operated simultaneously. Standardising the datum features across tools enables a universal frame to be used for all tools.

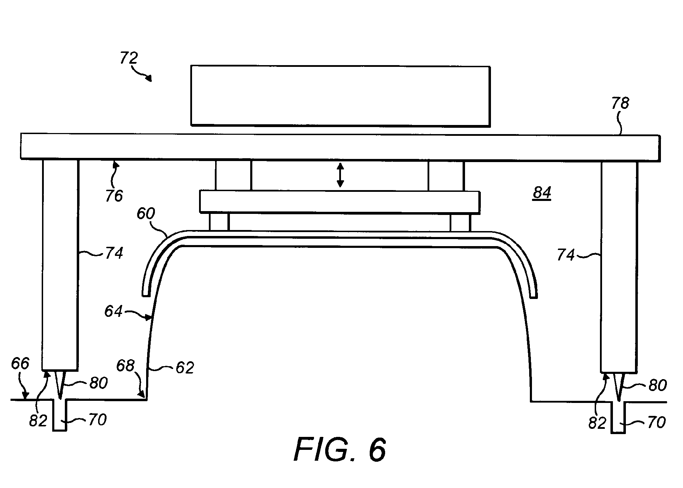

The transfer assembly 22 is also suitable for use with male mould tools, as will now be explained below with reference to Figure 6.

Figure 6 shows a spar cap 60 similar to the spar cap described above in relation to Figures 1 to 5, however the spar cap 60 in Figure 6 is formed using a male mould tool 62.

The male mould tool 62 is essentially 'top-hat' shaped in cross-section, and comprises a generally convex mould surface 64 and a lower base or flange 66 that surrounds and extends outwards from a periphery 68 of the convex mould surface 64.

A plurality of female datum features 70 are provided in the flange 66. A pair of female datum features 70 is shown in Figure 6. The female datum features 70 are located opposite one another on respective sides of the mould surface 64. In this example, the female datum features 70 each comprise a substantially cylindrical recess.

A transfer assembly 72 is also shown in Figure 6. The transfer assembly 72 is similar in most respects to the transfer assembly 22 described previously with reference to Figures 1 to 5. However, the transfer assembly 72 of Figure 6 further includes columns 74, which are mounted to an underside 76 of the frame 78. The columns 74 are mounted in pairs, on respective sides of the vacuum assembly. Two columns 74 are shown in the cross-sectional view of Figure 6.

Male datum features 80, in the form of conical pins, are mounted at the ends 82 of the respective columns 74. When the transfer assembly 72 is placed upon the male mould tool 62, the pins 80 are received in the recesses 70 defined in the flange 66 of the male mould tool 62 and the ends 82 of the columns 74 abut the flange 66 of the mould tool 62. The mating pins 80 and recesses 70 effectively lock the frame 78 in position relative to the mould tool 62 and prevent the frame 78 from moving laterally with respect to the mould tool 62.

The length of the respective columns 74 is selected so that the convex mould surface 64 of the male mould tool 62 is accommodated in a region 84 defined between the flange 66 and the frame 78 when the transfer assembly 72 is placed on the mould tool 62. Once the transfer assembly 72 has been positioned in mating engagement with the mould tool 62, the spar cap 60 is demoulded and transferred to an assembly jig in substantially the same way as already described above for the spar cap with reference to Figures 1 to 5.

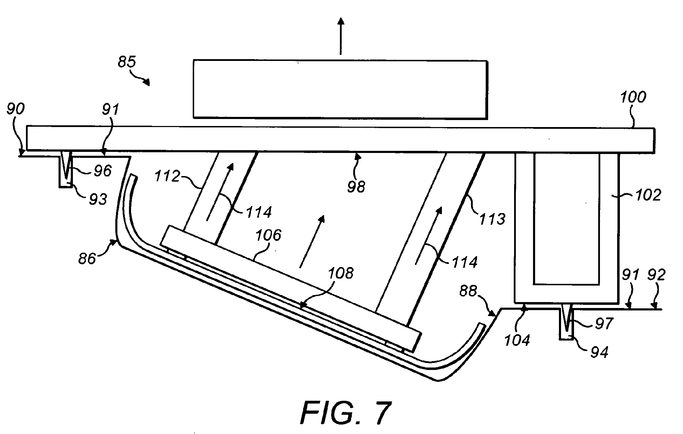

The geometry of long wind turbine components generally varies substantially along the length of the component. For example, and as mentioned by way of background above, it is common for components such as spar caps and blade shells to be designed with a twist along their length. Twisted components may be formed in twisted moulds, and the transfer assembly may be configured for use with such moulds as will now be described with reference to Figure 7.

Figure 7 is a cross-section taken through a transfer assembly 85 in datum registration with a twisted female mould tool 86. The female mould tool 86 may be the same mould tool as shown in Figure 1, but with the respective cross-sections of Figures 1 and 7 being taken at different locations along the length of the mould tool.

The part of the mould tool 86 shown in Figure 7 has a mould surface 88 that is generally inclined relative to, for example, the plane of a factory floor on which the mould tool 86 is supported. Consequently, a first part 90 of a flange 91 on one side of the mould surface 88 is located higher, with respect to the factory floor, than a second part 92 of the flange 91 on the other side of the mould surface 88.

As shown, the first part 90 of the flange 91 includes a first female datum feature 93, and the second part 92 of the flange includes a second female datum feature 94. The datum features 93, 94 each comprise a substantially cylindrical recess. Consequently, the opposed female datum features 93, 94 are located at different respective heights in this section of the mould tool 86. Whilst not evident from the cross-sectional view of Figure 7, a series of female datum features is provided in the flange 91 on each side of the mould surface 88, the datum features being provided at intervals along the length of the mould tool 86.

The cross-sectional view of Figure 7 also shows a pair of male datum features 96, 97, each comprising a substantially conical pin, provided on the underside 98 of the frame 100. The pin 96 for mating with the recess 93 in the relatively high part 90 of the flange 91 is mounted directly to the underside 98 of the frame 100, whilst the pin 97 for engaging with the recess 94 in the relative low part 92 of the flange 91 is provided on the end of a column 102 mounted to the underside 98 of the frame 100. When the frame 100 is placed upon the mould tool 86, the pins 96, 97 are received in the respective recesses 93, 94 and the underside 98 of the frame 100 abuts the relatively high part 90 of the flange 91, whilst the end 104 of the column 102 abuts the relatively low part 92 of the flange 91. The length of the column 102 is selected so that the frame 100 sits substantially horizontally on the mould tool 86 (i.e. parallel to the factory floor) when the male and female datum features mate.

To ensure that the vacuum pad 106 sits flush against the inner surface 108 of the spar cap 110, the vacuum pad 106 is inclined relative to the frame 100 and relative to the factory floor by the same angle as the mould surface 88. The inclination of the vacuum pad 106 is facilitated by the actuators 112, 113 that couple the vacuum pad 106 to the frame 100, which are also inclined relative to the frame 100. In this configuration, the actuators 112, 113 are necessarily extended by different amounts to hold the vacuum pad 106 flush against the inner surface 108 of the spar cap 110, with the actuator 112 closest to the relatively high part 90 of the flange 91 being shorter than the actuator 113 closest to the relatively low part 92 of the flange 91. The actuators 112, 113 are inclined such that a longitudinal axis of the actuators 112, 113 is substantially perpendicular to the plane of the mould surface 88 in the region of the mould surface 88 opposite the actuators 112, 113. This ensures that the demoulding load, as represented by the arrows 114, is applied to the spar cap 110 in a direction substantially normal to (i.e. perpendicular to) the plane of that part of the mould surface 88.

Whilst the above examples relate to wind turbine components, it will be appreciated that the present invention is equally suitable for use in manufacturing other parts, for example components for aeroplanes or indeed any other parts that are transported between manufacturing stations where maintaining precise alignment of the part is important.

## Claims

1. A method for transferring a workpiece (10) such as a large wind turbine component in datum alignment between tools during a manufacturing process, the method comprising:
arranging a support structure (24) in datum registration with a first tool (12), the first tool supporting a workpiece (10);
attaching the workpiece (10) to the support structure (24);
releasing the workpiece (10) from the first tool (12);
arranging the support structure (24) in datum registration with a second tool (50) and such that the workpiece (10) is supported by the second tool; and
releasing the workpiece (10) from the support structure (24);
wherein arranging the support structure in datum registration with the first and second tools ensures correct alignment of the workpiece with respect to the second tool.

2. The method of Claim 1 further comprising forming an interlock between the support structure (24) and the respective tools (12, 50), the interlock serving to restrict relative lateral movement between the support structure and the tools when the support structure is arranged in datum registration with the tools.

3. The method of any preceding claim, comprising attaching the workpiece (10) to the support structure (24) by means of vacuum.

4. The method of any preceding claim, wherein releasing the workpiece (10) from the first tool (12) comprises demoulding the workpiece from a mould surface of the first tool and demoulding the workpiece comprises peeling the workpiece away from the mould surface of the first tool.

5. The method of Claim 4 wherein peeling the workpiece (10) away from the mould surface comprises applying a release force sequentially to a series of successively-adjacent parts of the workpiece.

6. The method of any preceding claim, further comprising providing a plurality of modules each comprising a support structure (24), arranging the series of modules across the first tool (12) with each support structure arranged in datum registration with the first tool; attaching a respective part of the workpiece (10) to each module; releasing the workpiece from the first tool; arranging the series of modules across the second tool with each support structure arranged in datum registration with the second tool; and releasing the workpiece from the series of modules such that the workpiece is supported by and aligned with the second tool.

7. The method of Claim 6 when dependent upon Claim 5, comprising applying the release force sequentially to the series of successively-adjacent parts via the respective modules.

8. The method of any preceding claim, further comprising transporting the support structure (24) and attached workpiece to the second tool (50).

9. An apparatus for transferring a workpiece (10) such as a large wind turbine component in datum alignment between tools, the apparatus comprising:
a first tool (12) for supporting the workpiece (10);
a support structure (24) for carrying the workpiece between the first tool (12) and a second tool (50); and
an attachment device (30) for attaching the workpiece (10) to the support structure (24),
wherein the support structure (24) comprises datum features for aligning with corresponding datum features (20, 40, 56) of the first and second tools.

10. The apparatus of Claim 9, wherein the datum features (40) of the support structure (24) are configured to mate with complementary datum features (20, 56) of the tools.

11. The apparatus of Claims 9 or 10, wherein the apparatus is configured to prevent relative movement between the workpiece (10) and the support structure (24) when the workpiece is attached to the support structure.

12. The apparatus of any of Claims 9 to 11, wherein the attachment device (30) comprises a vacuum attachment for attaching to a surface of the workpiece (10).

13. The apparatus of any of Claims 9 to 12, further comprising a plurality of attachment devices (30), each being arranged to attach to a respective local surface portion of the workpiece (10).

14. The apparatus of Claim 13, wherein the plurality of attachment devices (30) are operable independently of one another.

15. The apparatus of Claim 14, wherein the plurality of attachment devices (30) are operable sequentially.

16. The apparatus of any of Claims 9 to 15, comprising a plurality of modules each having a respective support structure (24) and attachment device (30) associated therewith, wherein the plurality of modules are arranged in use at intervals along the length of the tool, with the attachment devices of the respective modules each attaching to a local surface of the workpiece (10).

## Patentansprüche

1. Ein Verfahren zum Übertragen eines Werkstücks (10), wie eine große Windturbinenkomponente, in Bezugspunktausrichtung zwischen Werkzeugen während eines Herstellungsprozesses, das Verfahren umfassend:
Anordnen einer Stützstruktur (24) in Bezugspunktregistrierung mit einem ersten Werkzeug (12), wobei das erste Werkzeug das Werkstück (10) stützt;
Befestigen des Werkstücks (10) an der Stützstruktur (24);
Lösen des Werkstücks (10) von dem ersten Werkzeug (12);
Anordnen der Stützstruktur (24) in Bezugspunktregistrierung mit einem zweiten Werkzeug (50) und sodass das Werkstück (10) von dem zweiten Werkzeug gestützt wird; und
Lösen des Werkstücks (10) von der Stützstruktur (24);
wobei das Anordnen der Stützstruktur in Bezugspunktregistrierung mit dem ersten und zweiten Werkzeug eine korrekte Ausrichtung des Werkstücks bezüglich des zweiten Werkzeugs gewährleitstet.

2. Das Verfahren nach Anspruch 1, weiterhin umfassend Bilden einer Sperre zwischen der Stützstruktur (24) und den jeweiligen Werkzeugen (12, 50), wobei die Sperre dazu dient, die relative seitliche Bewegung zwischen der Stützstruktur und den Werkzeugen einzuschränken, wenn die Stützstruktur in Bezugspunktregistrierung mit den Werkzeugen angeordnet ist.

3. Das Verfahren nach einem der vorhergehenden Ansprüche, umfassend Befestigen des Werkstücks (10) an der Stützstruktur (24) mittels Vacuum.

4. Das Verfahren nach einem der vorhergehenden Ansprüche, wobei Lösen des Werkstücks (10) von dem ersten Werkzeug (12) umfasst Entformen des Werkstücks von einer Formfläche des ersten Werkzeugs und Entformen des Werkstücks umfasst Abziehen des Werkstücks von der Formfläche des ersten Werkzeugs.

5. Das Verfahren nach Anspruch 4, wobei Abziehen des Werkstücks (10) von der Formfläche umfasst Anwenden einer Auslösekraft sequenziell auf eine Serie von aufeinanderfolgend benachbarten Teilen des Werkstücks.

6. Das Verfahren nach einem der vorhergehenden Ansprüche, weiterhin umfassend
Bereitstellen einer Vielzahl von Modulen, jedes umfassend eine Stützstruktur (24),
Anordnen der Serie von Modulen über dem ersten Werkzeug (12) mit jeder Stützstruktur angeordnet in Bezugspunktregistrierung mit dem ersten Werkzeug;
Befestigen eines entsprechenden Teils des Werkstücks (10) an jedem Modul;
Lösen des Werkstücks von dem ersten Werkzeug; Anordnen der Serie von Modulen über dem zweiten Werkzeug mit jeder Stützstruktur angeordnet in Bezugspunktregistrierung mit dem zweiten Werkzeug; und
Lösen des Werkstücks von der Serie von Modulen, sodass das Werkstück von dem zweiten Werkzeug gestützt und mit diesem ausgerichtet ist.

7. Das Verfahren nach Anspruch 6 wenn abhängig von Anspruch 5, umfassend Anwenden einer Auslösekraft sequenziell auf die Serie von aufeinanderfolgend benachbarten Teilen über die entsprechenden Module.

8. Das Verfahren nach einem der vorhergehenden Ansprüche, weiterhin umfassend Transportieren der Stützstruktur (24) und des befestigten Werkstücks zu dem zweiten Werkzeug (50).

9. Eine Vorrichtung zum Übertragen eines Werkstücks (10), wie eine große Windturbinenkomponente, in Bezugspunktausrichtung zwischen Werkzeugen, die Vorrichtung umfassend:
ein erstes Werkzeug (12) zum Stützen des Werkstücks (10);
eine Stützstruktur (24) zum Transportieren des Werkstücks zwischen dem ersten Werkzeug (12) und einem zweiten Werkzeug (50); und
eine Befestigungsvorrichtung (30) zum Befestigen des Werkstücks (10) an der Stützstruktur (24),
wobei die Stützstruktur (24) Bezugspunktmerkmale zum Ausrichten mit entsprechenden Bezugspunktmerkmalen (20, 40, 56) des ersten und des zweiten Werkzeugs umfasst.

10. Die Vorrichtung nach Anspruch 9, wobei die Bezugspunktmerkmale (40) der Stützstruktur (24) konfiguriert sind, um mit komplementären Bezugspunktmerkmalen (20, 56) der Werkzeuge paarweise angeordnet zu werden.

11. Die Vorrichtung nach Anspruch 9 oder 10, wobei die Vorrichtung konfiguriert ist, um eine relative Bewegung zwischen dem Werkstück (10) und der Stützstruktur (24) zu verhindern, wenn das Werkstück an der Stützstruktur befestigt ist.

12. Die Vorrichtung nach einem der Ansprüche 9 bis 11, wobei die Befestigungsvorrichtung (30) eine Vakuumbefestigung zum Befestigen an einer Oberfläche des Werkstücks (10) umfasst.

13. Die Vorrichtung nach einem der Ansprüche 9 bis 12, weiterhin umfassend eine Vielzahl von Befestigungsvorrichtungen (30), jede angeordnet zum Befestigen an einem entsprechenden lokalen Oberflächenabschnitt des Werkstücks (10).

14. Die Vorrichtung nach Anspruch 13, wobei die Vielzahl von Befestigungsvorrichtungen (30) unabhängig voneinander bedienbar ist.

15. Die Vorrichtung nach Anspruch 14, wobei die Vielzahl von Befestigungsvorrichtungen (30) sequenziell bedienbar ist.

16. Die Vorrichtung nach einem der Ansprüche 9 bis 15, umfassend eine Vielzahl von Modulen, jedes umfassend eine entsprechende Stützstruktur (24) und eine mit dieser assoziierte Befestigungsvorrichtung (30), wobei die Vielzahl von Modulen im Einsatz in Intervallen entlang der Länge des Werkzeugs angeordnet ist, wobei die Befestigungsvorrichtungen der entsprechenden Module an einer lokalen Oberfläche des Werkstücks (10) befestigt sind.

## Revendications

1. Procédé pour transférer une pièce (10) telle qu'un grand composant de turbine éolienne en alignement de repères entre des outils durant un processus de fabrication, le procédé comprenant :
l'agencement d'une structure de support (24) en positionnement de repères avec un premier outil (12), le premier outil supportant une pièce (10) ;
la fixation de la pièce (10) à la structure de support (24) ;
le dégagement de la pièce (10) du premier outil (12) ;
l'agencement de la structure de support (24) en positionnement de repères avec un second outil (50) et
de sorte que la pièce (10) soit supportée par le second outil ; et
le dégagement de la pièce (10) de la structure de support (24) ;
dans lequel l'agencement de la structure de support en positionnement de repères avec les premier et second outils assure l'alignement correct de la pièce par rapport au second outil.

2. Procédé selon la revendication 1 comprenant en outre la formation d'un emboîtement entre la structure de support (24) et les outils respectifs (12, 50), l'emboîtement servant à limiter le déplacement latéral relatif entre la structure de support et les outils quand la structure de support est agencée en positionnement de repères avec les outils.

3. Procédé selon l'une quelconque des revendications précédentes, comprenant la fixation de la pièce (10) à la structure de support (24) au moyen d'un vide.

4. Procédé selon l'une quelconque des revendications précédentes, dans lequel le dégagement de la pièce (10) du premier outil (12) comprend le démoulage de la pièce d'une surface de moule du premier outil et le démoulage de la pièce comprend le décollement de la pièce de la surface de moule du premier outil.

5. Procédé selon la revendication 4 dans lequel le décollement de la pièce (10) de la surface de moule comprend l'application d'une force de dégagement séquentiellement à une série de parties de la pièce successivement adjacentes.

6. Procédé selon l'une quelconque des revendications précédentes, comprenant en outre la fourniture d'une pluralité de modules comprenant chacun une structure de support (24), l'agencement de la série de modules sur le premier outil (12) avec chaque structure de support agencée en positionnement de repères avec le premier outil ; la fixation d'une partie respective de la pièce (10) à chaque module ; le dégagement de la pièce du premier outil ; l'agencement de la série de modules sur le second outil avec chaque structure de support agencée en positionnement de repères avec le second outil ; et le dégagement de la pièce de la série de modules de sorte que la pièce soit supportée par le second outil et aligné sur celui-ci.

7. Procédé selon la revendication 6 quand elle dépend de la revendication 5, comprenant l'application de la force de dégagement séquentiellement à la série de parties successivement adjacentes par le biais des modules respectifs.

8. Procédé selon l'une quelconque des revendications précédentes, comprenant en outre le transport de la structure de support (24) et la fixation de la pièce au second outil (50).

9. Appareil pour transférer une pièce (10) telle qu'un grand composant de turbine éolienne en alignement de repères entre des outils, l'appareil comprenant :
un premier outil (12) pour supporter la pièce (10) ;
une structure de support (24) pour supporter la pièce entre le premier outil (12) et un second outil (50) ; et
un dispositif de fixation (30) pour fixer la pièce (10) à la structure de support (24),
dans lequel la structure de support (24) comprend des éléments de repères pour l'alignement sur des éléments de repères correspondants (20, 40, 56) des premier et
second outils.

10. Appareil selon la revendication 9, dans lequel les éléments de repères (40) de la structure de support (24) sont configurés pour s'accoupler des éléments de repères complémentaires (20, 56) des outils.

11. Appareil selon la revendication 9 ou 10, dans lequel l'appareil est configuré pour empêcher le déplacement relatif entre la pièce (10) et la structure de support (24) quand la pièce est fixée à la structure de support.

12. Appareil selon l'une quelconque des revendications 9 à 11, dans lequel le dispositif de fixation (30) comprend une fixation sous vide pour fixation à une surface de la pièce (10).

13. Appareil selon l'une quelconque des revendications 9 à 12, comprenant en outre une pluralité de dispositifs de fixation (30), chacun étant agencé pour être fixé à une partie de surface locale respective de la pièce (10).

14. Appareil selon la revendication 13, dans lequel la pluralité de dispositifs de fixation (30) peuvent fonctionner indépendamment les uns des autres.

15. Appareil selon la revendication 14, dans lequel la pluralité de dispositifs de fixation (30) peuvent fonctionner séquentiellement.

16. Appareil selon l'une quelconque des revendications 9 à 15, comprenant une pluralité de modules ayant chacun une structure de support respective (24) et un dispositif de fixation (30) associé à celle-ci, dans lequel la pluralité de modules sont agencés lors de l'utilisation à intervalles le long de la longueur de l'outil, avec les dispositifs de fixation des modules respectifs se fixant chacun à une surface locale de la pièce (10).
